# EUROPÄISCHE PATENTANMELDUNG

(11) **EP 1 632 465 A1**
(43) Veröffentlichungstag der Anmeldung: **08.03.2006**
(21) Anmeldenummer: 04021217.7
(22) Anmeldetag: 07.09.2004
(51) Int. Cl.: C04B 41/85, F16D 69/02, F16D 65/12

(54) **Durch Nanopartikel modifizierte Carbon-Keramik-Bremsscheiben**

(71) Anmelder: SGL CARBON AG, 65203 Wiesbaden (DE)
(72) Erfinder: Güther, Hans-Michael, 61462 Königstein (DE); Rosenlöcher, Jens, 86153 Augsburg (DE); Bauer, Moritz, 86153 Augsburg (DE)
(74) Vertreter: Deckers, Hellmuth Alexander

(57) **Zusammenfassung**

Carbon-Keramik-Bremsscheiben, deren nach der Infiltration mit einem carbidbildenden Element und Reaktion dieses Elements mit mindestens einem Teil des Kohlenstoffs des Vorkörpers der Carbon-Keramik-Bremsscheibe unter Bildung von Carbiden verbliebene Porosität zumindest teilweise mit Teilchen gefüllt ist, deren mittlerer Durchmesser im Bereich von 0,5 nm bis 20 nm liegt, und Verfahren zur Herstellung von Carbon-Keramik-Bremsscheiben mit verminderter Porosität, bei dem Carbon-Keramik-Bremsscheiben mit einer Lösung von organischen Verbindungen des Bors, des Zirkons, des Titans, des Siliciums oder des Aluminiums oder Mischungen solcher Verbindungen behandelt werden, wobei die genannten organischen Verbindungen als Sole in einem organischen Lösungsmittel vorliegen, die so behandelten Bremsscheiben nach Entnahme aus dem Solbad in einem Ofen mit einer Aufheizgeschwindigkeit zwischen 30 K/h und 300 K/h unter Luft oder Schutzgas getrocknet werden und bei einer Endtemperatur zwischen 350 °C und 800 °C anschließend zwischen 20 Minuten und 120 Minuten getempert werden

## Beschreibung

Die Erfindung betrifft Carbon-Keramik-Bremsscheiben, in denen zumindest ein Teil der Poren des keramischen Werkstoffes Nanopartikel enthält, und ein Verfahren zur Herstellung von derart mit Nanopartikeln modifizierten Carbon-Keramik-Bremsscheiben.

Carbon-Keramik-Bremsscheiben bestehen aus einem mit Fasern aus Kohlenstoff verstärkten keramischen Werkstoff, dessen Matrix Siliciumcarbid enthält. Sie können hergestellt werden durch Infiltrieren eines mit Fasern aus Kohlenstoff verstärkten porösen Kohlenstoff-Körpers mit flüssigem oder gasförmigen Silicium, wobei mindestens ein Teil des Kohlenstoffs in der Matrix mit dem Silicium zu Siliciumcarbid reagiert. Abhängig von der Menge des bei der Infiltration eingesetzten Siliciums verbleibt ein größerer oder kleinerer Teil der Poren in dem erzeugten Werkstoff. Zusätzlich können sich prozeßbedingte Mikrorisse in der Abkühlphase nach der Silicierung aufgrund der unterschiedlichen thermischen Ausdehnungskoeffizienten der Phasenbestandteile bilden.

Die verbliebenen Poren sind zumindest teilweise von der Oberfläche der Carbon-Keramik-Bremsscheibe aus zugänglich. Diese Poren können durch Aufnahme von Feuchtigkeit aus der Umgebung (Luft oder Wasser beim Fahren auf nasser Strecke) Wasser enthalten, das bei der Temperaturerhöhung der Scheibe beim Bremsen verdampft und als Gas aus den Poren entweicht. Das entweichende Gas kann eine Gleitschicht zwischen der Bremsscheibe und den Bremsbelägen bilden und so das Ansprechen der Bremse verzögern. Während diese Erscheinung bei der herkömmlichen Kombination von Bremsscheiben aus Gußeisen mit organisch gebundenen Bremsbelägen auf den oberflächlich auf der Scheibe anhaftenden Feuchtigkeitsfilm und die Porosität der Bremsbeläge und den daraus entweichenden Gasen beschränkt ist, kann durch die Porosität der keramischen Bremsscheibenwerkstoffe die Menge der entweichenden Gase und damit die Zeit, bevor die Gasschicht zwischen Bremse und Belag zusammenbricht, deutlich verlängert werden. Dieses Verhalten ist auch experimentell verifiziert worden, wobei die Zeit beim Naßbremsen bis zum Ansprechen der Bremse und dem Beginn des Aufbaus des Reibwertes zwischen Scheibe und Belag im Fall der Carbon-Keramik-Bremsscheibe größer ist als bei der Kombination einer Grauguß-Bremsscheibe mit einem herkömmlichen Bremsbelag. Der Aufbau der Reibungskraft verläuft jedoch im Fall der Carbon-Keramik-Bremsscheibe deutlich schneller, so daß durch das schnellere Erreichen des Trockenreibwertes der Nachteil im Ansprechverhalten bei der Carbon-Keramik-Bremsscheibe überkompensiert wird.

Es ist jedoch wünschenswert, diese Verzögerung beim Einsetzen der Bremswirkung gegenüber der Kombination einer Grauguß-Bremsscheibe mit einem herkömmlichen Belag zu verkürzen oder zu verbessern.

Es ist weiter beobachtet worden, daß bei Einwirkung von Salzlösungen, insbesondere solchen, die durch Auftauen von Mischungen von Schnee oder Eis mit im Winter eingesetzten Streusalzen entstehen, einerseits die geschilderten Erscheinungen im Naßbremsverhalten verstärkt werden und andererseits bei häufiger und längerer Einwirkung von derartigen Salzlösungen bei Carbon-Keramik-Bremsscheiben Abplatzungen auf der Reibfläche auftreten können.

Versuche zur Verminderung der Porosität der Carbon-Keramik-Bremsscheiben durch Infiltration beispielsweise mit weiteren flüssigen Metallen oder flüssigen glasartig erstarrenden anorganischen Werkstoffen haben nicht zum Ziel geführt.

Die Aufgabe der Erfindung ist daher, das Eindringen von Wasser oder Salzlösungen in die von außen zugänglichen Poren einer Carbon-Keramik-Bremsscheibe zu vermindern oder auszuschließen, ohne durch das Verschließen der Poren zusätzliche Spannungen zu erzeugen.

Die Aufgabe wird gelöst durch zumindest teilweises Füllen der Poren mit Teilchen, die einen mittleren Durchmesser im Bereich von 0,5 nm bis 20 nm aufweisen, und die hier als "Nanopartikel" bezeichnet werden. Der mittlere Teilchendurchmesser wird in bekannter Weise als Zahlenmittel durch Messung der Durchmesser einer Stichprobe der betreffenden Teilchen, Summieren der gefundenen Durchmesser und Division dieser Summe durch die Anzahl der gemessenen Teilchen bestimmt.

Gegenstand der Erfindung sind daher Carbon-Keramik-Bremsscheiben, deren nach der Infiltration mit einem carbidbildenden Element und Reaktion dieses Elements mit mindestens einem Teil des Kohlenstoffs des Vorkörpers der Carbon-Keramik-Bremsscheibe unter Bildung von Carbiden verbliebene Porosität zumindest teilweise mit Teilchen gefüllt ist, deren mittlerer Durchmesser im Bereich von 0,5 nm bis 20 nm liegt.

Die Carbon-Keramik-Bremsscheiben werden bevorzugt gemäß der in der DE 107 10 105 A1 beschriebene Verfahrensweise durch Infiltration mit flüssigem Silicium eines porösen Vorkörpers aus mit Fasern aus Kohlenstoff verstärktem Kohlenstoff hergestellt. Der Vorkörper wird bevorzugt durch Carbonisieren, also Erhitzen unter Ausschluß von oxydierenden Gasen, von einem mit Fasern aus Kohlenstoff verstärkten Körper aus Phenolharzen erzeugt.

Weiterer Gegenstand der Erfindung ist ein Verfahren zur Verminderung der Porosität von Carbon-Keramik-Bremsscheiben, bei dem Carbon-Keramik-Bremsscheiben mit einer Lösung von organischen Verbindungen von Elementen der Gruppen IIIb, IVb, IIIa und IVa des Periodischen Systems der Elemente, insbesondere des Bors, des Zirkons, des Titans, des Siliciums oder des Aluminiums oder Mischungen solcher Verbindungen behandelt werden, wobei die genannten organischen Verbindungen als Sole in einem organischen Lösungsmittel vorliegen, die so behandelten Bremsscheiben nach Entnahme aus dem Solbad in einem Ofen mit einer Aufheizgeschwindigkeit zwischen 30 K/h und 300 K/h unter Luft oder Schutzgas getrocknet werden und bei einer Endtemperatur zwischen 350 °C und 800 °C anschließend zwischen 20 Minuten und 120 Minuten getempert werden. Nach dem Abkühlen werden die Bremsscheiben dem Ofen entnommen.

Bevorzugt ist der mittlere Durchmesser der Teilchen 1,0 nm bis 10 nm, insbesondere 2 nm bis 5 nm. Bevorzugt enthalten die Teilchen Oxide von Elementen der Gruppen IIIb, IVb, IIIa und IVa des Periodischen Systems der Elemente, insbesondere Bortrioxid, Zirkondioxid, Titandioxid oder Mullit (Mischoxid von Aluminiumtrioxid und Siliciumdioxid im stöchiometrischen Verhältnis von 3 Al₂O₃ · 2 SiO₂) oder Kombinationen dieser Oxide. Diese Teilchen füllen bevorzugt mindestens 50 % des Volumens der nach der Infiltration mit einem carbidbildenden Element verbliebene Poren, besonders bevorzugt ist ein Füllungsgrad von mindestens 70 %, und insbesondere von mindestens 80 %. Der Füllungsgrad wird bestimmt durch Messung der Porosität der Carbon-Keramik-Bremsscheiben vor und nach der Behandlung. Die Teilchen werden gebildet durch thermische Zersetzung der genannten organischen Verbindungen.

Bevorzugte Verfahrensschritte sind:
a) Zubereitung eines Sols mit einem Festkörper-Massenanteil von 1 % bis 10 %, bevorzugt von 2 % bis 6 %, enthaltend mindestens eine organische Verbindung des Bors, des Zirkons, des Titans, des Siliciums und des Aluminiums, wobei als Lösungsmittel insbesondere Ketone, Ester und Äther ausgewählt bevorzugt aus Aceton, Butanon-2, Methylisobutylketon, den Acetaten von aliphatischen linearen oder verzweigten Alkoholen mit 2 bis 8 Kohlenstoffatomen, und den Dimethyl- und Diäthyl-Äthern von Glykol, Diglykol und Propandiol-1,2 eingesetzt werden, und wobei die organischen Verbindungen bevorzugt Alkoxide der genannten Elemente sind, insbesondere Ester der von diesen Elementen abgeleiteten ortho-Säuren mit bevorzugt mehrwertigen linearen oder verzweigten aliphatischen Alkoholen mit 2 bis 12 Kohlenstoffatomen, wie beispielsweise Ester zweiwertiger Alkohole mit der Orthoborsäure H₃BO₃,
b) Eintauchen der zu behandelnden Carbon-Keramik-Bremsscheibe in die Sole gemäß a) und Anlegen eines Unterdrucks im Gasraum über dem Sol von bevorzugt 5 mbar bis 100 mbar (5 hPa bis 100 hPa), wobei die in den Poren befindliche Luft im wesentlichen entweicht, für einen Zeitraum von bevorzugt mindestens 15 Minuten nach Beendigung der Gasentwicklung durch die Entlüftung des Porenvolumens, und Brechen des Unterdrucks durch Belüften der Taucheinrichtung,
c) Überführen der abgetropften Carbon-Keramik-Bremsscheibe aus Schritt b) in einen Trockenofen und Aufheizen der Carbon-Keramik-Bremsscheiben mit einer Aufheizgeschwindigkeit von 30 K/h bis 300 K/h, bevorzugt 50 K/h bis 200 K/h, und insbesondere von 80 K/h bis 150 K/h, bis zu einer Temperatur von 350 °C bis 800 °C, bevorzugt 450 °C bis 700 °C, und insbesondere 500 °C bis 650 °C. Nach Erreichen der Endtemperatur werden die Scheiben noch mindestens 15 Minuten, bevorzugt mindestens 30 Minuten bis zu einer Stunde bei dieser Temperatur gehalten, abgekühlt und nach Abkühlen aus dem Ofen entnommen. Die Atmosphäre in dem Ofen während des Tempervorgangs kann sich von der während des Aufheizens unterscheiden. Sofern während des Aufheizens ein Schutzgas verwendet wird, ist es vorteilhaft, zumindest während eines Teils des Tempervorgangs Luft oder ein oxydierendes Gas einzusetzen. Dabei kann die Temperatur auch soweit abgesenkt werden, daß eine oxydative Veränderung der getemperten Bremsscheiben beispielsweise durch Oxydation des nicht ungesetzten Kohlenstoffs ausgeschlossen werden kann. In diesem Schritt werden die Teilchen durch thermische Zersetzung der elementorganischen Verbindungen gebildet.

Das Porenvolumen wird in bekannter Weise gemäß der DIN 51 918 bestimmt. Es beträgt üblicherweise weniger als 10 %, bevorzugt höchstens 7,5 %, und besonders bevorzugt höchstens 5 % des (geometrischen) Volumens der Carbon-Keramik-Bremsscheibe, bestimmt nach ihren äußeren Abmessungen. Die verbliebene Porosität (Porenvolumen bezogen auf das geometrische Volumen) nach der erfindungsgemäßen Behandlung ist daher höchstens 5 %, bevorzugt höchstens 3,75 %, und besonders bevorzugt höchstens 2,5 %.

Bei den Untersuchungen an erfindungsgemäß modifizierten Carbon-Keramik-Bremsscheiben hat sich gezeigt, daß die in den Poren abgeschiedenen Nanopartikel einen Belag hauptsächlich an den Porenwänden bilden, der bei ausreichender Menge an Nanopartikeln eine zusammenhängende Beschichtung bildet.

Die Erfindung wird durch die nachfolgenden Beispiele erläutert:

### Beispiel 1 Imprägnierung

Eine gemäß dem Ausführungsbeispiel der DE 197 10 105 hergestellte Carbon-Keramik-Bremsscheibe mit einer Kohlenstoff, Silicium und Siliciumcarbid enthaltenden Matrix und Verstärkungsfasern aus Kohlenstoff wurde in ein Borpentandiolat-Sol (Festkörper-Massenanteil 4 %) getaucht. Der Imprägnierbehälter wurde evakuiert, bis der Druck im überstehenden Gasraum noch 17 mbar (17 hPa) betrug. Dabei wurde eine Gasentwicklung beobachtet, die nach wenigen Minuten nachließ. Die Probe wurde 15 Minuten unter diesen Bedingungen bei Raumtemperatur belassen, dann wurde der Imprägnierbehälter belüftet und die Bremsscheibe wurde entnommen. Nach Abtrocknen mit Zellstoffvlies wurde die Bremsscheibe in einen Trockenofen mit einem Volumen von ca. 1001 gebracht, und dieser wurde unter einem Luftstrom von 5 l/h auf eine Temperatur von 600 °C aufgeheizt. Nach Erreichen der Solltemperatur wurde noch 30 Minuten bei diesen Bedingungen gehalten, anschließend wurde der Ofen abgekühlt und die Probe daraus entnommen. Die Porosität der Carbon-Keramik-Bremsscheibe betrug vor der Behandlung 4 %, und nach der Behandlung 1,9 %, jeweils gemessen nach DIN 51 918.

### Beispiel 2 Naßbremstest

Jeweils eine gemäß dem Beispiel 1 behandelte Carbon-Keramik-Bremsscheibe und eine entsprechend unbehandelte Carbon-Keramik-Bremsscheibe wurden in einem Bremsenprüfstand bezüglich ihres Naßbremsverhaltens getestet. Dabei wurde die Carbon-Keramik-Bremsscheibe jeweils auf eine der Geschwindigkeit von 150 km/h entsprechende Drehzahl beschleunigt und durch Besprühen mit entionisiertem Wasser angefeuchtet. Nach Auslösen des Bremsvorgangs wurde die Zeitverzögerung *t*_{D} bis zum Einsatz der Bremswirkung gemessen, indem die Steigung des Reibwertes bis zu einer Verzögerung von 4 m/s² extrapoliert wurde, und der Schnittpunkt dieser Gerade mit der Zeitachse bestimmt wurde. Während bei der unbehandelten Scheibe eine mittlere Zeitverzögerung *t*_{D} von 980 ms bei 50 Versuchen festgestellt wurde, ergab sich bei einer erfindungsgemäß behandelten Scheibe lediglich eine mittlere Zeitverzögerung *t*_{D} von 210 ms. Im Vergleich dazu wurde bei einer herkömmlichen Paarung mit einer Grauguß-Bremsscheibe und einem üblichen organisch gebundenen Belag eine Zeitverzögerung *t*_{D} von 180 ms beobachtet.

### Beispiel 3 Salztest

Beispiel 2 wurde wiederholt, das Wasser wurde durch eine wäßrige Lösung von Kochsalz (Massenanteil NaCl in der Lösung: 1,5 %) ersetzt. Für die besprühte Scheibe wurde eine mittlere Verzögerung des Einsatzes der Bremswirkung von 290 ms (Vergleich Carbon-Keramik-Bremsscheibe ohne Modifikation gemäß Beispiel 1: 1350 ms; jeweils Mittelwert von 50 Versuchen) gemessen.

### Beispiel 4 Salztest mit thermischer Belastung

In einem Prüfstand gemäß der deutschen Patentanmeldung DE 103 46 498 wurden eine gemäß Beispiel 1 behandelte Carbon-Keramik-Bremsscheibe und eine gleichartige unbehandelte Carbon-Keramik-Bremsscheibe jeweils 50 der nachfolgend beschriebenen Zyklen bestehend aus den Schritten a) und b) unterworfen:
a) Besprühen der Carbon-Keramik-Bremsscheibe auf beiden Reibflächen mit 250 ml einer Salzlösung gemäß Beispiel 3
b) Erwärmen auf dem Thermoprüfstand auf 800 °C für die Dauer von 30 Minuten, danach Abkühlen

Bei der unbehandelten Carbon-Keramik-Bremsscheibe waren nach 12 Zyklen bereits vereinzelte Abplatzungen im Bereich der Reibfläche zu sehen, nach 20 Zyklen waren deutliche Schäden auf der Reibfläche zu erkennen, während die gemäß Beispiel 1 behandelte Scheibe nach 50 Zyklen noch keine Schädigung zeigte.

Wie zu zeigen war, bewirkte die Füllung der Poren in einer Carbon-Keramik-Bremsscheibe durch Teilchen mit einer mittleren Teilchengröße im Nanometerbereich eine deutliche Verbesserung sowohl des Naßbremsverhaltens (Wasser, Salzlösung) als auch eine verbesserte Beständigkeit gegenüber korrosivem Angriff von Salzlösungen.

## Patentansprüche

1. Carbon-Keramik-Bremsscheiben, deren nach der Infiltration mit einem carbidbildenden Element und Reaktion dieses Elements mit mindestens einem Teil des Kohlenstoffs des Vorkörpers der Carbon-Keramik-Bremsscheibe unter Bildung von Carbiden verbliebene Porosität zumindest teilweise mit Teilchen gefüllt ist, deren mittlerer Durchmesser im Bereich von 0,5 nm bis 20 nm liegt.

2. Carbon-Keramik-Bremsscheiben nach Anspruch 1, **dadurch gekennzeichnet, daß** die Teilchen Oxide von Elementen der Gruppen IIIb, IVb, IIIa und IVa des Periodischen Systems der Elemente enthalten.

3. Carbon-Keramik-Bremsscheiben nach Anspruch 1, **dadurch gekennzeichnet, daß** die Teilchen Stoffe ausgewählt aus Bortrioxid, Zirkondioxid, Titandioxid und Mullit enthalten.

4. Carbon-Keramik-Bremsscheiben nach Anspruch 1, **dadurch gekennzeichnet, daß** die Teilchen mindestens 50 % des Volumens der nach der Infiltration mit einem carbidbildenden Element verbliebenen Poren füllen.

5. Verfahren zur Verminderung der Porosität von Carbon-Keramik-Bremsscheiben, bei dem Carbon-Keramik-Bremsscheiben mit einer Lösung von organischen Verbindungen von Elementen der Gruppen IIIb, IVb, IIIa und IVa des Periodischen Systems der Elemente oder Mischungen solcher Verbindungen behandelt werden, wobei die genannten organischen Verbindungen als Sole in einem organischen Lösungsmittel vorliegen, die so behandelten Bremsscheiben nach Entnahme aus dem Solbad in einem Ofen mit einer Aufheizgeschwindigkeit zwischen 30 K/h und 300 K/h unter Luft oder Schutzgas getrocknet werden und bei einer Endtemperatur zwischen 350 °C und 800 °C anschließend zwischen 20 Minuten und 120 Minuten getempert werden.

6. Verfahren nach Anspruch 5, **dadurch gekennzeichnet, daß** als organische Verbindungen des Bors, des Zirkons, des Titans, des Siliciums oder des Aluminiums Ester der ortho-Säuren dieser Elemente mit linearen oder verzweigten aliphatischen Alkoholen mit 2 bis 12 Kohlenstoffatomen eingesetzt werden.

7. Verfahren nach Anspruch 1, **dadurch gekennzeichnet, daß** als Lösungen der organischen Verbindungen Sole mit einem Festkörper-Massenanteil von 1 % bis 10 % in einem Lösungsmittel ausgewählt aus Aceton, Butanon-2, Methylisobutylketon, den Acetaten von aliphatischen linearen oder verzweigten Alkoholen mit 2 bis 8 Kohlenstoffatomen, und den Dimethyl- und Diäthyl-Äthern von Glykol, Diglykol und Propandiol-1,2 eingesetzt werden.
